# DEMANDE DE BREVET EUROPEEN

(11) **EP 1 632 632 A1**
(43) Date de publication de la demande: **08.03.2006**
(21) Numéro de dépôt: 05300524.5
(22) Date de dépôt: 28.06.2005
(51) Int. Cl.: E05F 5/02

(54) **Appui en compression de capôt de véhicule automobile**

(30) Priorité: 01.09.2004 FR 0409253
(71) Demandeur: Renault, 92109 Boulogne Billancourt (FR)
(72) Inventeur: Bignon, Yannick, 92290 CHATENAY-MALABRY (FR); Boucherit, Kaci, 92250 LA GARENNE COLOMBES (FR); Berruyer, Laurent, 91160, LONGJUMEAU (FR)

(57) **Abrégé**

L'invention concerne un ensemble formant butée de fermeture et absorbeur de choc (100, 150) pour capot (200) de véhicule automobile, comprenant un organe (100) configuré pour être fusible en cas de choc sur le capot (200), l'ensemble étant caractérisé en ce qu'il comporte des moyens de maintien de cet organe dans une zone située sensiblement à l'aplomb de la façade avant technique (300) du véhicule.

## Description

La présente invention concerne, de façon générale, les butées d'absorption de chocs de véhicules automobiles lorsque ceux-ci sont placés sous le capot du véhicule en position avant de ce dernier, afin d'amortir le choc subi par un piéton heurtant accidentellement le capot.

On a proposé de nombreux types de telles butées, qui typiquement remplissent aussi le rôle de maintien du capot dans la position précisément souhaitée pour ce dernier, c'est à dire en affleurement avec les ailes du véhicule.

On citera à titre d'exemple de telles butées d'absorption de chocs, telles que proposées dans le EP 1 104 726.

La butée comporte deux aspects : d'une part il est prévu deux types d'amortissement successifs au sein de la même butée et d'autre part il est prévu de fixer cette butée au creux d'un élément de structure du véhicule.

Les deux comportements successifs de la butée d'absorption sont matérialisés par la présence d'un ressort hélicoïdal et d'une liaison à affaissement de matière, ce qui permet d'absorber le choc avec une dureté croissante. En effet, l'entrée en contact du piéton sur le capot provoque d'abord la compression du ressort, puis au cours de l'enfoncement du capot sous l'effet de l'inertie de la masse du piéton, l'élément d'affaissement se déforme en produisant par là une absorption plus forte, car de fin de course.

Ce type de butée, en raison de son encombrement assez élevé, requiert donc de la placer non pas sur la face supérieure d'une traverse, mais à l'intérieur d'un aménagement spécifiquement réservé au sein de la traverse en question.

Autrement dit, ce type de butée présente un comportement mécanique avantageux mais un encombrement élevé.

On notera d'ailleurs qu'une traverse ne peut présenter un tel aménagement d'accueil que dans des zones très particulières d'un véhicule. En pratique, une telle traverse ne peut recevoir la butée qu'entre le projecteur et le radiateur du véhicule, là où l'espace est suffisant.

Cette contrainte de positionnement nuit au fonctionnement ordinaire de la butée, qui est de permettre le placement en affleurement du capot fermé. En effet, une butée positionnée au-delà du projecteur vers le centre du véhicule se trouve relativement éloignée des bords latéraux du capot et a donc tendance à mal assurer le positionnement de ceux-ci en particulier dans le cas où le capot est de grandes dimensions.

Aussi, quand bien même la butée est précisément dimensionnée, celle-ci ne peut qu'approximativement influer sur la hauteur effective de la bordure du capot, car trop éloignée latéralement de cette bordure.

C'est un but de l'invention que de proposer une configuration de butée d'absorption qui, outre ses qualités d'absorption, ne présente pas des contraintes de placement diminuant son efficacité en tant que butée de fermeture de capot, c'est à dire son efficacité à garantir un affleurement capot/aile.

Ce but est atteint selon l'invention grâce à un ensemble formant butée de fermeture et absorbeur de choc pour capot de véhicule automobile, comprenant un organe configuré pour être fusible en cas de choc sur le capot, l'ensemble étant caractérisé en ce qu'il comporte des moyens de maintien de cet organe dans une zone située sensiblement à l'aplomb de la façade avant technique du véhicule.

On propose également selon l'invention un aménagement avant de véhicule automobile, comprenant une façade avant technique, au moins une butée d'absorption de choc appliqué au capot, la butée comprenant un organe configuré pour s'affaisser en cas de choc sur le capot, l'aménagement étant caractérisé en ce qu'il comporte en outre des moyens de maintien de la butée sensiblement à l'aplomb de la façade avant technique.

Grâce à un tel positionnement d'une butée à affaissement, typiquement un pontet fusible, dans une zone qui était jusque là dénuée de tout aménagement de ce type, on jouit d'une liberté de positionnement accrue, et notamment d'une possibilité de positionner la butée directement en bordure latérale du capot. Il s'avère en outre qu'une butée de ce type se positionnant dans une telle zone, remplit son rôle d'absorbeur de chocs avec une efficacité tout à fait notable.

L'invention apporte donc deux avantages combinés, dont on comprendra mieux la nature ci-après.

Ainsi, d'autres caractéristiques, buts et avantages de l'invention apparaîtront à la lecture de la description détaillée qui va suivre, faite en référence aux figures annexées sur lesquelles :

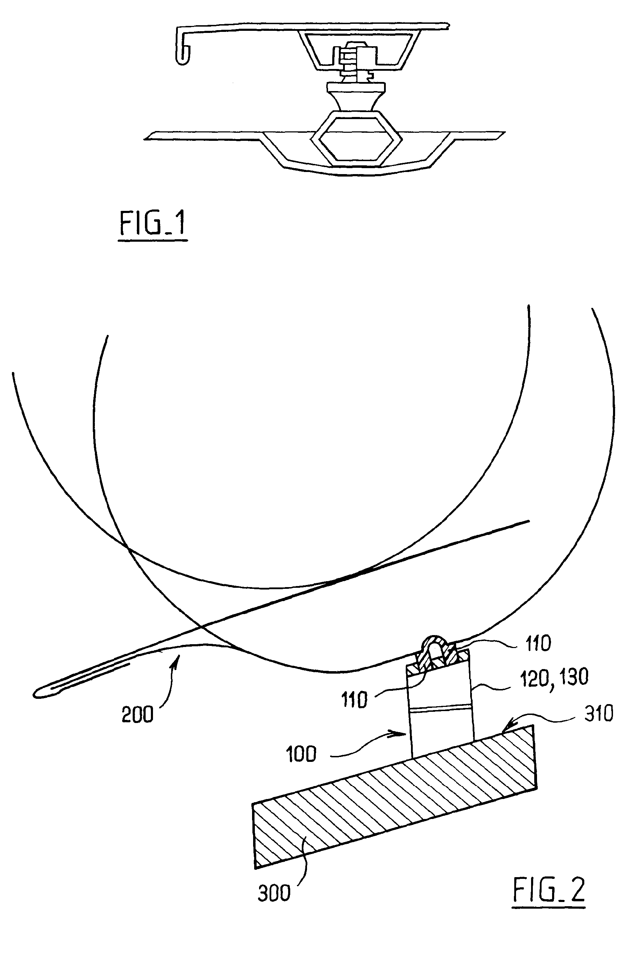

- la figure 1 représente une butée d'absorption de choc conforme à l'art antérieur ;
- la figure 2 représente, en vue de section longitudinale, une butée d'absorption de choc conforme à une variante préférée de l'invention.
- la figure 3 représente cette même butée en section transversale.

Un support fusible 100 comporte deux pattes 120, 130 s'étendant transversalement en vis à vis l'une de l'autre et raccordées par un plateau supérieur 110, de façon à former un U.

Chacune des pattes 120 et 130 est munie d'une zone d'amorçage de fusibilité telle qu'une zone de pliage ou de rupture comme par exemple, une diminution d'épaisseur.

Les extrémités inférieures des pattes 120 et 130 sont solidaires d'une surface supérieure 310 d'un élément de support connu sous le nom de « façade avant technique 300 », qui est agencé sur une partie avant de la caisse du véhicule.

La façade avant technique 300 comporte typiquement un ventilateur, un radiateur, une grille d'aération ou des projecteurs.

Dans le présent mode de réalisation, la surface supérieure 310 de la face avant technique 300 est orientée de manière oblique, c'est à dire ici plongeante vers l'avant du véhicule, dans une direction sensiblement parallèle à celle de la surface supérieure du capot lorsque celui-ci est en position fermée.

Le plateau supérieur 110 du support 100 forme aménagement de réception d'un capot en appui supérieur. Il est pour cela muni d'un tampon élastomère sous la forme d'une capsule 150 creuse enfichée dans un orifice correspondant du plateau supérieur 110.

La déformabilité de cette capsule 150 permet d'absorber élastiquement une très faible course du capot lors de la fermeture en force de ce dernier. Le support 100 joue alors le rôle de butée d'absorption.

Ainsi positionné, le support 100 est également destiné à amortir un choc, notamment descendant, appliqué sur la face supérieure du capot 200.

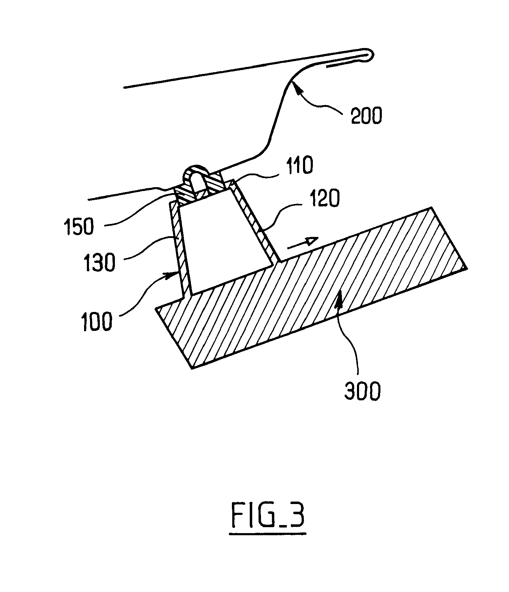

Lors d'un accident avec un piéton, c'est généralement la tête de ce dernier qui heurte le capot, tel que représenté à la figure 2, ce qui se traduit par un déplacement du capot vers le bas, en direction de la surface supérieure de la façade avant technique.

Le capot 200 doit alors, grâce au support fusible 100, accompagner le poids du piéton et présenter un débattement suffisant en direction verticale, et éventuellement en direction longitudinale au véhicule.

Ce support fusible 100 est ici en matière plastique, par exemple thermoplastique.

Après un choc sur le capot, le support fusible s'est affaissé et ses pattes 120, 130 se sont pliées le long de la zone de fusibilité en s'éloignant l'une de l'autre.

Dans cette configuration, le capot 200 s'est rapproché de la façade avant technique 300 qui est, elle, solidaire de la structure porteuse du véhicule.

Ainsi, les supports fusibles 100, c'est à dire des organes destinés à s'affaisser par déformation de matière, étaient jusqu'ici considérés comme des pièces forcément positionnées à proximité du bloc moteur, en liaison direct avec la structure du véhicule. Ici, ils sont au contraire proposés dans un positionnement particulier, dans lequel il n'existait pas jusque là de tels éléments déformables.

En effet, de tels supports de type fusibles, qu'ils soient conformes à la variante décrite ici, ou conformes à toute autre variante, s'avèrent présenter un avantage certain à être placés sur la surface supérieure de la façade avant technique 300.

On propose donc ici une façade avant technique 300 portant elle-même de tels supports fusibles.

Le support fusible 100 peut présenter une structure hybride tôle + plastique dont la partie plastique est issue de la façade avant technique 300. La partie plastique du support forme alors son moyen de maintien sur la façade.

Un tel support fusible 100 peut être totalement rapporté et fixé sur la façade avant technique. Le support fusible est alors associé à la façade avant par des moyens de maintien formés alors par l'extrémité de ses pattes 120, 130, vissées, collées ou rivetées sur la façade avant 300.

Les moyens de maintien du support fusible à la position choisie peuvent être associés à la surface supérieure de la façade avant technique, mais également à tout autre élément appartenant par exemple à un autre organe du véhicule.

Il s'avère ainsi que de tels organes, une fois positionnés sur la surface supérieure de la façade avant technique 300, sont d'une efficacité mécanique tout à fait améliorée. En effet, d'abord ils peuvent être rapprochés des bords latéraux du capot et ainsi retenir précisément celui-ci, en affleurement des ailes, mais on constate également une efficacité notable en absorption de choc.

De plus, de tels organes déformables, typiquement de petite taille, sont aisément positionnés à cet endroit.

En d'autres termes, ces organes ainsi positionnés remplissent plus efficacement leur rôle de support d'indexage en positionnement vertical pour le capot, et leur rôle d'absorption avec une efficacité importante.

Un tel support 100 ne gêne ni les projecteurs, ni l'accès aux ampoules des projecteurs.

La façade avant technique 300 ainsi proposée satisfait les exigences requises en cas de choc piéton tout en présentant la robustesse (raideur) également requise.

## Revendications

1. Ensemble formant butée de fermeture et absorbeur de choc (100, 150) pour capot (200) de véhicule automobile, comprenant un organe (100) configuré pour être fusible en cas de choc sur le capot (200), l'ensemble étant **caractérisé en ce qu'**il comporte des moyens de maintien de cet organe dans une zone située sensiblement à l'aplomb de la façade avant technique (300) du véhicule.

2. Ensemble selon la revendication 1, **caractérisé en ce que** l'organe fusible est enforme de U (100).

3. Ensemble selon la revendication 2, **caractérisé en ce que** l'organe fusible en U (100) présente, sur chacune de ses pattes (120, 130), un aménagement d'affaiblissement destiné à initier l'affaissement.

4. Ensemble selon l'une quelconque des revendications 2 et 3, **caractérisé en ce que** l'organe fusible (100) présente une face (110) destinée à recevoir le capot (200) en appui, cette face étant munie d'un élément élastomère (150) apte à amortir l'arrivée du capot (200) en fin de fermeture de ce dernier.

5. Ensemble selon l'une quelconque des revendications précédentes, **caractérisé en ce que** l'organe fusible (100) est solidaire de la façade avant technique (300).

6. Ensemble selon la revendication précédente, **caractérisé en ce que** l'organe fusible (100) est venu de matière avec une partie de la façade avant technique (300).

7. Aménagement avant de véhicule automobile, comprenant une façade avant technique (300), au moins une butée d'absorption de choc (100, 150) appliqué au capot (200), la butée (100, 150) comprenant un organe configuré pour s'affaisser en cas de choc sur le capot (200), l'aménagement étant **caractérisé en ce qu'**il comporte en outre des moyens de maintien de la butée (100, 150) sensiblement à l'aplomb de la façade avant technique (300).
